# EUROPEAN PATENT APPLICATION

(11) **EP 2 698 591 A1**
(43) Date of publication of application: **19.02.2014**
(21) Application number: 12771928.4
(22) Date of filing: 18.01.2012
(51) Int. Cl.: F28F 21/02, B82Y 30/00, H01H 37/34

(54) **HEAT FLOW SWITCH**

(30) Priority: 12.04.2011 JP 2011088535
(71) Applicant: NGK Insulators, Ltd., Nagoya-shi, Aichi 467-8530 (JP); National University Corporation Nagoya University, Nagoya-shi, Aichi 464-8601 (JP)
(72) Inventor: TAKAHASHI Tomonori, Nagoya-shi Aichi 467-8530 (JP); OTSUKA Haruo, Nagoya-shi Aichi 467-8530 (JP); KUSUNOKI Michiko, Nagoya-shi Aichi 464-8601 (JP); NORIMATSU Wataru, Nagoya-shi Aichi 464-8601 (JP)
(74) Representative: TBK
(86) International application number: PCT/JP2012/050952
(87) International publication number: WO 2012/140927

(57) **Abstract**

A heat float switch 10 includes a first member 20 and a second member 30. The first member 20 includes a base member 22 and a carbon nanotube layer 24 formed on a surface 22a of the base member 22. The heat float switch 10 switches states between a connected state in which the carbon nanotube layer 24 of the first member 20 is in contact with the second member 30 and an unconnected state in which the carbon nanotube layer 24 of the first member 20 is not in contact with the second member 30.

## Description

### TECHNICAL FIELD

This application is based upon and claims the benefit of priority of the prior Japanese Patent application No. 2011-088535, filed on April 12, 2011, the entire contents of which are incorporated herein by reference.

The technique disclosed in the present description relates to a heat float switch capable of changing thermal conductivity by switching states between a state in which two members are in contact with each other and a state in which the members are not in contact with each other.

### BACKGROUND ART

Japanese National Publication of PCT Application No. 2009-531821 discloses a heat float switch that changes states between a state in which two members are in contact with each other and a state in which the members are not in contact with each other. In the state in which two members are in contact with each other (hereinafter referred to as a connected state), heat is transferred between these members. In the state in which two members are not in contact with each other, heat transfer between these members is blocked.

### SUMMARY OF INVENTION

### Technical Problem

In a heat float switch, it is preferable that the thermal resistance between the two members in the connected state is low (hereinafter, the thermal resistance between the two members in the connected state will be referred to the thermal resistance of the heat float switch). In order to decrease the thermal resistance of the heat float switch, it is necessary to form the contacting surfaces of the two members as flat as possible. This is because, when uneven depressions are present on the contacting surfaces, gaps are formed in the interface between the two members being in the connected state and the thermal resistance between these members increases. However, even when the contacting surfaces are processed to be flat, nanometer-order uneven depressions remain on the contacting surfaces. These uneven depressions become one of the causes that increase the thermal resistance of the heat float switch. Thus, it is desired to further reduce the thermal resistance of the heat float switch. Thus, the present description provides a heat float switch having lower thermal resistance.

### Solution to Problem

A heat float switch disclosed in the present description includes a first member and a second member. The first member includes a base member and a carbon nanotube layer formed on the surface of the base member. The heat float switch is configured to switch states between a connected state in which the carbon nanotube layer of the first member is in contact with the second member and an unconnected state in which the carbon nanotube layer of the first member is not in contact with the second member.

The switching between the connected state and the unconnected state may be performed electrically or may be performed by another method. For example, the connected state and the unconnected state may be switched by an actuator that is electrically controlled to move at least one of the first and second members. Moreover, the connected state and the unconnected state may be switched by using thermal expansion and contraction of the first and second members.

In the heat float switch, the first member includes the carbon nanotube layer. Carbon nanotubes have a very high thermal conductivity. Moreover, the carbon nanotubes have high elasticity. Thus, the carbon nanotube layer can be deformed elastically. Therefore, even when very small uneven depressions are present on a contacting surface of the second member (a surface that contacts the carbon nanotube layer in the connected state), the carbon nanotube layer can be deformed to match the uneven depressions on the second member when the carbon nanotube layer makes contact with the second member. Thus, in this heat float switch, gaps are rarely formed in the interface between the first and second members being in the connected state. That is, the carbon nanotube layer can be in close contact with the contacting surface of the second member. In this manner, in this heat float switch, the carbon nanotube layer having very high thermal conductivity is in close-contact with the second member. Thus, the heat float switch has low thermal resistance (the thermal resistance between the first and second members in the connected state).

Japanese Patent Application Publication No. 2009-253123 discloses a technique of connecting a semiconductor device and a heat sink by a carbon nanotube layer in order to reduce the thermal resistance between the semiconductor device and the heat sink. However, this technique is different from the technique of the present description relating to a heat float switch that switches states between the connected state and the unconnected state, in that the heat sink is fixed to the semiconductor device (that is, both are always in the connected state). In the heat float switch disclosed in the present description, since the switching between the connected state and the unconnected state is repeated, pressure is repeatedly applied to the carbon nanotube layer. That is, the technique disclosed in the present description provides a finding that carbon nanotubes have practical durability against repeated application of pressure and realizes a heat float switch having durability of a practical level and low thermal resistance by utilizing the durability.

In the heat float switch, it is preferable that the second member includes a base member and a carbon nanotube layer formed on the surface of the base member, and the carbon nanotube layer of the first member is in contact with the carbon nanotube layer of the second member in the connected state.

In this manner, if the carbon nanotube layer is also formed on the contacting surface of the second member, the carbon nanotube layers of both the first and second members in the connected state can be deformed elastically. Thus, the first member can come into closer contact with the second member. Therefore, according to this configuration, it is possible to further reduce the thermal resistance of the heat float switch.

In the heat float switch, it is preferable that 30% or more of carbon nanotubes included in the carbon nanotube layer of the first member stand so as to have an angle of 60 degrees or more with respect to the base member. The angle of 0 degree means that the carbon nanotubes are parallel to the surface of the base member, and the angle of 90 degrees means that the carbon nanotubes are vertical to the surface of the base member.

In this manner, when most of the carbon nanotubes included in the carbon nanotube layer of the first member stand at an angle close to 90 degrees with respect to the surface of the base member, most of the carbon nanotubes have distal ends being in contact with the second member. Thus, the carbon nanotube layer can easily come in close contact with the second member.

In the heat float switch, it is preferable that a resin is impregnated in the carbon nanotube layer of the first member.

In this manner, when a resin is impregnated in the gaps between the carbon nanotubes in the carbon nanotube layer, since the thermal conductivity of the carbon nanotube layer increases further, it is possible to further reduce the thermal resistance of the heat float switch.

In the heat float switch, it is preferable that the thickness of the carbon nanotube layer of the first member is 0.5 µm or more.

When the carbon nanotube layer has a thickness of 0.5 µm or more, the carbon nanotube layer can be appropriately deformed to match the shape of the contacting surface of the second member.

In the heat float switch, it is preferable that the base member of the first member is made of SiC.

When the base member made of SiC is used, the connection strength between the carbon nanotubes and the base member is likely to increase. Thus, according to this configuration, it is possible to improve the durability of the heat float switch. When the base member made of SiC is used, it is preferable to form the carbon nanotube layer on the surface of the base member by heating the base member made of SiC in a reduced-pressure atmosphere and oxidizing and removing Si atoms on the surface of the base member. When the carbon nanotube layer is formed in this manner, it is possible to further improve the connection strength between the carbon nanotube and the base member.

### BRIEF DESCRIPTION OF DRAWINGS

FIG. 1 is a side view of a heat float switch according to a first embodiment (unconnected state);
FIG. 2 is a side view of the heat float switch according to the first embodiment (connected state);
FIG. 3 is an enlarged side view near contacting surfaces of the heat float switch according to the first embodiment (unconnected state);
FIG. 4 is an enlarged side view near the contacting surfaces of the heat float switch according to the first embodiment (connected state);
FIG. 5 is an enlarged side view near contacting surfaces of a conventional heat float switch (connected state);
FIG. 6 is an enlarged side view near the contacting surfaces of the conventional heat float switch when extraneous material is caught between the contacting surfaces;
FIG. 7 is an enlarged side view near the contacting surfaces of the heat float switch according to the first embodiment when an extraneous material is caught between the contacting surfaces;
FIG. 8 is an enlarged side view near contacting surfaces of a heat float switch according to a second embodiment (unconnected state);
FIG. 9 is an enlarged side view near the contacting surfaces of the heat float switch according to the second embodiment (connected state);
FIG. 10 is a table showing evaluation results of thermal resistance of heat float switches according to experimental examples;
FIG. 11 is an enlarged side view near contacting surfaces of a heat float switch according to a modified embodiment (unconnected state);
FIG. 12 is an enlarged side view near contacting surfaces of the heat float switch according to the modified embodiment (connected state); and
FIG. 13 is a view for explaining a standing angle of a carbon nanotube.

### DESCRIPTION OF EMBODIMENTS

### (First Embodiment)

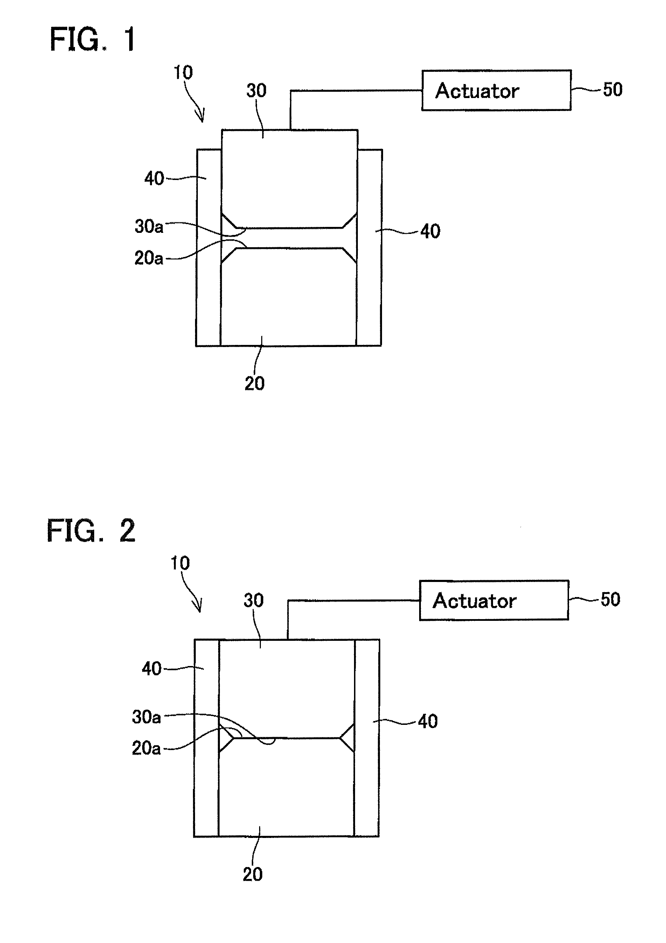

As shown in FIG. 1, a heat float switch 10 according to a first embodiment includes a thermally conductive member 20, a thermally conductive member 30, a guide 40, and an actuator 50. The thermally conductive member 20 includes a contacting surface 20a. The thermally conductive member 30 includes a contacting surface 30a. The thermally conductive members 20 and 30 are disposed at such positions that the contacting surfaces 20a and 30a face each other. The thermally conductive member 20 is fixed to the guide 40. The thermally conductive member 30 is restricted by the guide 40 so as to be immovable in a lateral direction (a direction parallel to the contacting surface 20a) in relation to the thermally conductive member 20. Moreover, the thermally conductive member 30 is guided by the guide 40 so as to move closer to or away from the thermally conductive member 20. The actuator 50 is connected to the thermally conductive member 30 to allow the thermally conductive member 30 to move closer to or away from the thermally conductive member 20. When the actuator 50 moves the thermally conductive member 30, states are switched between a state in which the thermally conductive member 20 is not in contact with the thermally conductive member 30 as shown in FIG. 1 (hereinafter referred to as an unconnected state) and a state in which the thermally conductive member 20 is in contact with the thermally conductive member 30 (hereinafter referred to as a connected state). The operation of the actuator 50 is electrically controlled by a control circuit (not shown).

The guide 40 is made of a heat insulating material. The thermally conductive member 20 is made mainly of SiC and the thermal conductivity of the thermally conductive member 20 is high, which will be described in detail later. Moreover, the thermally conductive member 30 is made of Cu and the thermal conductivity of the thermally conductive member 30 is high. The thermally conductive member 20 is connected to a high-temperature member (not shown), and the thermally conductive member 30 is connected to a low-temperature member (not shown). Thus, heat is transferred from the thermally conductive member 20 to the thermally conductive member 30 in the connected state, whereas heat transfer from the thermally conductive member 20 to the thermally conductive member 30 is blocked in the unconnected state. That is, the heat transfer can be controlled by the heat float switch 10.

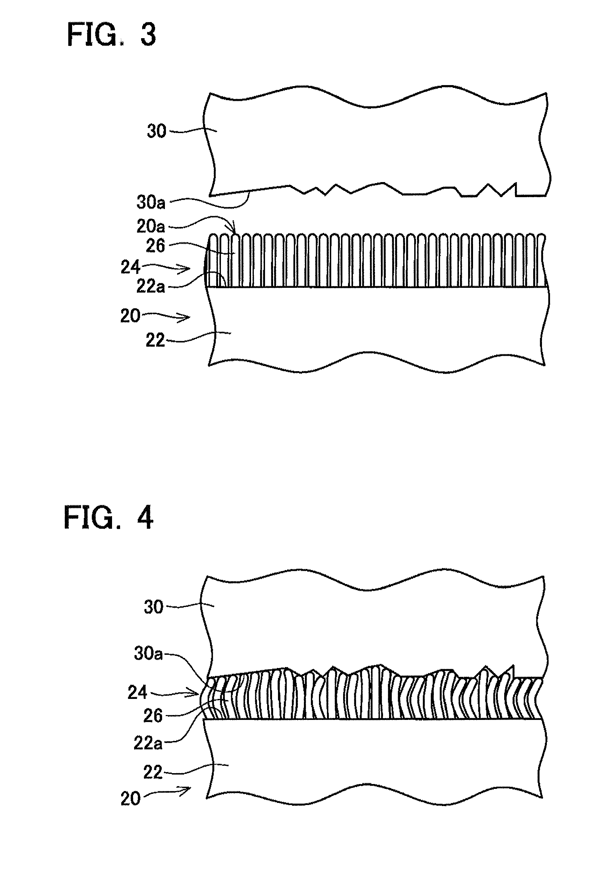

FIG. 3 shows an enlarged side view of a portion of the heat float switch 10 near the contacting surfaces 20a and 30a. As shown in FIG. 3, the thermally conductive member 20 includes a base member 22 and a carbon nanotube layer 24. The base member 22 is made of SiC. A number of carbon nanotubes 26 stand on a surface 22a of the base member 22 closer to the thermally conductive member 30. These carbon nanotubes 26 form the carbon nanotube layer 24. The distal ends of the carbon nanotubes 26 form the contacting surface 20a.

As shown in FIG. 3, uneven depressions are formed on the contacting surface 30a of the thermally conductive member 30. These uneven depressions have a depth of nanometer order and cannot be removed even after the contacting surface 30a is subjected to flattening processing.

As shown in FIG. 4, when the heat float switch 10 is put into the connected state, the carbon nanotube layer 24 of the thermally conductive member 20 makes contact with the contacting surface 30a of the thermally conductive member 30. In this case, the distal ends of the carbon nanotubes 26 make contact with the contacting surface 30a. The carbon nanotubes 26 are pressed in the axial direction (the longitudinal direction) with the distal ends making contact with the contacting surface 30a. In this way, the carbon nanotubes 26 are warped. Thus, the whole carbon nanotube layer 24 is elastically deformed to match the uneven depression shape of the contacting surface 30a.

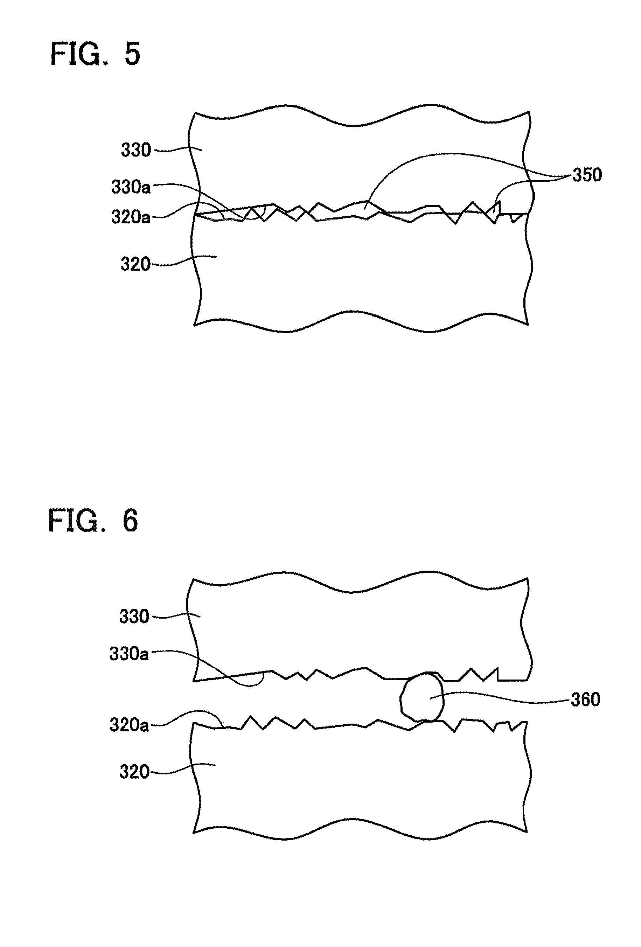

On the other hand, FIG. 5 shows an enlarged side view near contacting surfaces of a conventional heat float switch. In the conventional heat float switch, a carbon nanotube layer is not formed on any one of the contacting surfaces 320a and 330a. Moreover, nanometer-order uneven depressions are present on the contacting surfaces 320a and 330a. Thus, gaps 350 are formed in the interface between thermally conductive members 320 and 330 in the connected state.

As is obvious from comparison between FIGS. 4 and 5, in the heat float switch 10 according to the first embodiment, gaps are rarely formed in the interface between the thermally conductive members 20 and 30 in the connected state. That is, in the heat float switch 10, the carbon nanotube layer 24 is in close contact with the contacting surface 30a. Moreover, the carbon nanotubes 26 have high thermal conductivity. In particular, the carbon nanotubes 26 have very high thermal conductivity (approximately 3000 W/mK) in the longitudinal direction. Further, since the base member 22 is made of SiC, the thermal conductivity of the base member 22 is also high (approximately 150 W/mK). Furthermore, the carbon nanotubes 26 stand on the base member 22 made of SiC. In such a configuration, the thermal conductivity of a connecting portion between the carbon nanotubes 26 and the base member 22 (the boundary between the carbon nanotube layer 24 and the base member 22) is also high. Thus, the thermal resistance between the thermally conductive members 20 and 30 in the connected state is low. That is, the heat float switch 10 according to the first embodiment has lower thermal resistance than the conventional heat float switch.

In addition, in the heat float switch 10 according to the first embodiment, the carbon nanotube layer 24 is easily deformed. Thus, even if the force that presses the thermally conductive member 30 toward the thermally conductive member 20 in the connected state is small, the carbon nanotube layer 24 can come into close contact with the thermally conductive member 30. That is, in the heat float switch 10, low thermal resistance is obtained with small pressing force. Thus, the actuator 50 having small pressing ability can be used. Due to this, it is possible to decrease the size of the heat float switch 10.

In addition, the heat float switch 10 repeatedly switches the states between the connected state and the unconnected state. Thus, the carbon nanotubes 26 are repeatedly pressed by the thermally conductive member 30. However, the carbon nanotubes 26 have high durability against the repeated application of pressure. Thus, the heat float switch 10 according to the first embodiment has sufficient durability.

The carbon nanotubes 26 are formed by heating the base member 22 made of SiC to 1400°C or more (for example, 1600°C) in a reduced-pressure atmosphere. When the base member is heated in this manner, SiC on the surface of the base member 22 is decomposed according to a reaction formula: SiC (solid) + O (gas) → SiO (gas) + C (solid). That is, Si atoms in SiC crystals are selectively oxidized and removed, and C atoms remaining on the surface self-assemble carbon nanotubes. According to this method, the carbon nanotubes 26 grow approximately vertical to the base member 22 made of SiC. Moreover, when the carbon nanotubes 26 are grown according to this method, it is expected that covalent bonding are maintained in the connecting portion between the carbon nanotubes 26 and SiC. Thus, high strength is obtained in the connecting portion between the carbon nanotubes 26 and the base member 22, and high thermal conductivity is obtained in the connecting portion. In this manner, since the connecting portion between the carbon nanotubes 26 and the base member 22 has high strength, the carbon nanotubes 26 have higher durability against repeated application of pressure. Due to this, the durability of the heat float switch 10 according to the first embodiment is further improved.

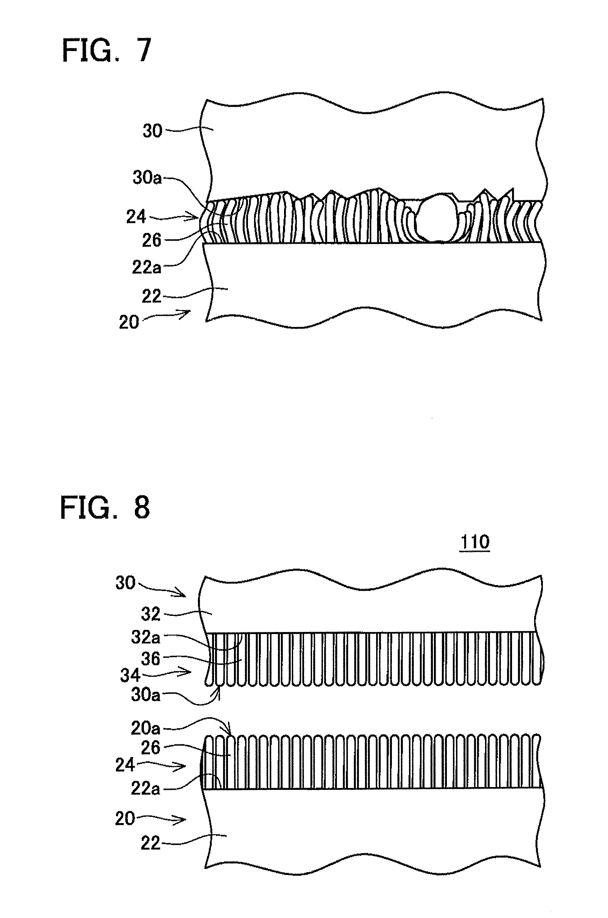

In addition, a very small extraneous material may be caught in a heat float switch when the heat float switch is in the connected state. FIG. 6 shows a state in which a very small extraneous material 360 is caught between the two thermally conductive members 320 and 330 of the conventional heat float switch. When the extraneous material 360 is caught in this manner, the thermally conductive members 320 and 330 cannot make whole-surface contact with each other, and the thermal resistance of the heat float switch increases remarkably. In contrast, in the heat float switch 10 according to the first embodiment, as shown in FIG. 7, when an extraneous material 60 is caught between the thermally conductive members 20 and 30, the carbon nanotubes 26 in a region that is in contact with the extraneous material 60 are compressed, and the carbon nanotubes 26 in a region that is not in contact with the extraneous material 60 make contact with the thermally conductive member 30. In this manner, since the carbon nanotubes 26 can make contact with the thermally conductive member 30 excluding the region where the extraneous material 60 is present, the thermal resistance of the heat float switch 10 rarely increases even when the extraneous material 60 is caught. Therefore, the heat float switch 10 can be used in an environment where the cleanliness is lower.

A resin may be impregnated in the carbon nanotube layer 24. When a resin is impregnated in the carbon nanotube layer 24, the resin enters into the space between the carbon nanotubes 26. Due to this, it is possible to further increase the thermal conductivity of the carbon nanotube layer 24. The resin being impregnated is preferably as soft as not to prevent the deformation of the carbon nanotubes 26, and a gelled resin (for example, gelled thermally conductive grease) is preferred.

### (Second Embodiment)

A heat float switch 110 according to a second embodiment has the same configuration as the heat float switch 10 according to the first embodiment except for the thermally conductive member 30. As shown in FIG. 8, in the heat float switch 110 according to the second embodiment, the thermally conductive member 30 includes a base member 32 and a carbon nanotube layer 34. The base member 32 is made of SiC. A number of carbon nanotubes 36 stand on a surface 32a of the base member 32 closer to the thermally conductive member 20. These carbon nanotubes 36 form the carbon nanotube layer 34. The distal ends of the carbon nanotubes 36 form a contacting surface 30a of the thermally conductive member 30.

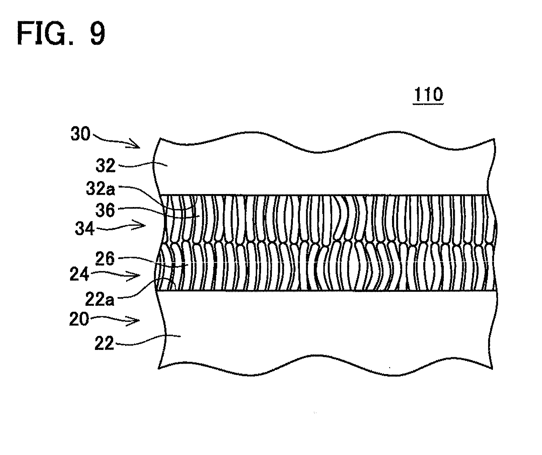

In the heat float switch 110 according to the second embodiment, both the contacting surface 20a of the thermally conductive member 20 and the contacting surface 30a of the thermally conductive member 30 are formed by the carbon nanotube layer. Thus, as shown in FIG. 9, when the heat float switch 110 is put into the connected state, both carbon nanotube layers 24 and 34 are elastically deformed. Thus, gaps are more rarely formed in the boundary between the thermally conductive members 20 and 30. Therefore, the heat float switch 110 has low thermal resistance.

In the heat float switch 110 according to the second embodiment, a resin may be impregnated in the carbon nanotube layers 24 and 34.

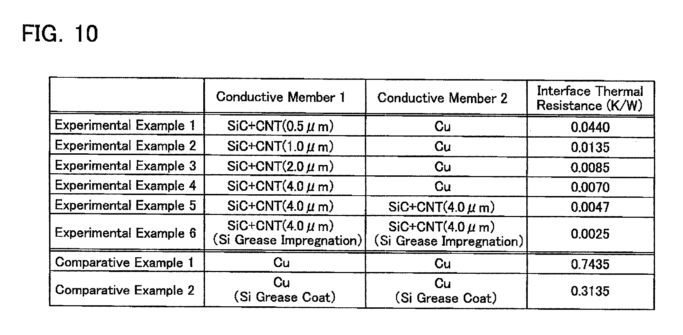

FIG. 10 shows evaluation results obtained by simulating the thermal resistance (interface thermal resistance between thermally conductive members 1 and 2 shown in FIG. 10) of heat float switches having the configuration of the first and second embodiments.

In Experimental Examples 1 to 4, heat float switches having the configuration of the first embodiment were evaluated. That is, a configuration in which a thermally conductive member having a carbon nanotube layer formed on a base member made of SiC was used as the thermally conductive member 1, and a member (with no carbon nanotube layer) made of Cu was used as the thermally conductive member 2 was evaluated. Moreover, in Experimental Examples 1 to 4, the heat float switches were evaluated while changing the thickness of the carbon nanotube layer between 0.5 µm and 4 µm. As denoted by Experimental Examples 1 to 4, a result that the thicker the carbon nanotube layer, the smaller becomes the thermal resistance was obtained.

In Experimental Examples 5 and 6, heat float switches having the configuration of the second embodiment were evaluated. That is, a configuration in which a thermally conductive member having a carbon nanotube layer formed thereon was used as both the thermally conductive members 1 and 2 was evaluated. In Experimental Example 5, the thickness of the carbon nanotube layers of the thermally conductive members 1 and 2 was set to 4 µm. In this case, a result that the thermal resistance decreased more than that of Experimental Example 4 was obtained. Moreover, in Experimental Example 6, a configuration in which silicon grease was impregnated in the carbon nanotube layers of Experimental Example 5 was evaluated. In this case, a result that the thermal resistance decreased more than that of Experimental Example 5 was obtained.

FIG. 10 also shows evaluation results of Comparative Examples 1 and 2 having the configuration of the conventional heat float switch. In Comparative Example 1, a configuration in which both thermally conductive members were made of Cu (with no carbon nanotube layer) was evaluated. Moreover, in Comparative Example 2, a configuration in which silicon grease was coated on the contacting surfaces of the thermally conductive members of Comparative Example 1 was evaluated. As is obvious from FIG. 10, the configurations of Experimental Examples 1 to 6 provide thermal resistance that is remarkably lower than that of any one of the configurations of Comparative Examples 1 and 2. It can be understood from the results of FIG. 10 that a sufficient thermal resistance reducing effect is obtained if the thickness of the carbon nanotube layer is 0.5 µm or more. In particular, it can be understood that the thermal resistance can be reduced more effectively if the thickness of the carbon nanotube layer is 1.0 µm or more.

In addition, in the conventional heat float switch, since the two thermally conductive members are made of metal, the surface of the thermally conductive members may be covered with an oxide film having high thermal resistance and the thermal resistance between the thermally conductive members may increase with time. In the heat float switches according to the above mentioned embodiments, since the contacting surface of at least one of the thermally conductive members is made of a carbon nanotube layer, an oxide film is prevented from being formed on the contacting surface. Due to this, it is possible to suppress the thermal resistance between the thermally conductive members from increasing. Further, in the conventional heat float switch, since the thermally conductive member is metal, the contacting surface may be worn due to repeated use. In the heat float switches according to the above mentioned embodiments, since the carbon nanotube layer that constitutes the contacting surface has high wear resistance, it is possible to suppress the occurrence of wear. Moreover, in the conventional heat float switch, since two thermally conductive members are connected with strong force to obtain low thermal resistance, the two thermally conductive members made of metal may adhere to each other. In the heat float switches according to the above mentioned embodiments, since low thermal resistance is obtained without using a great force, and no metal members are brought into contact with each other, the problem of adhesion can be prevented.

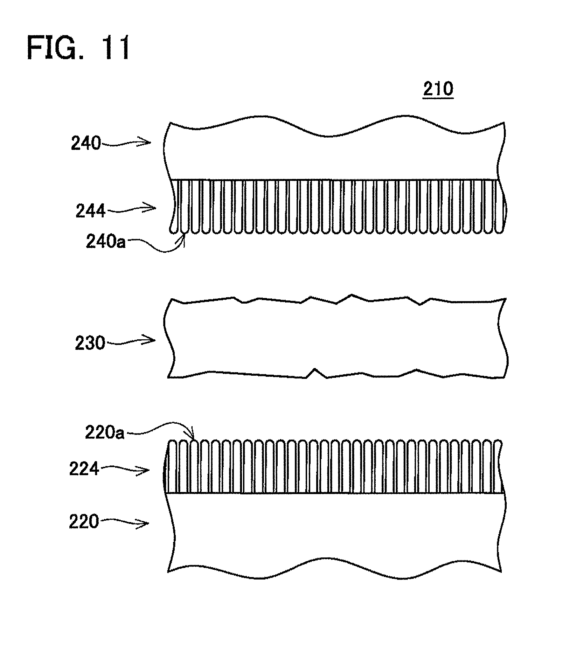

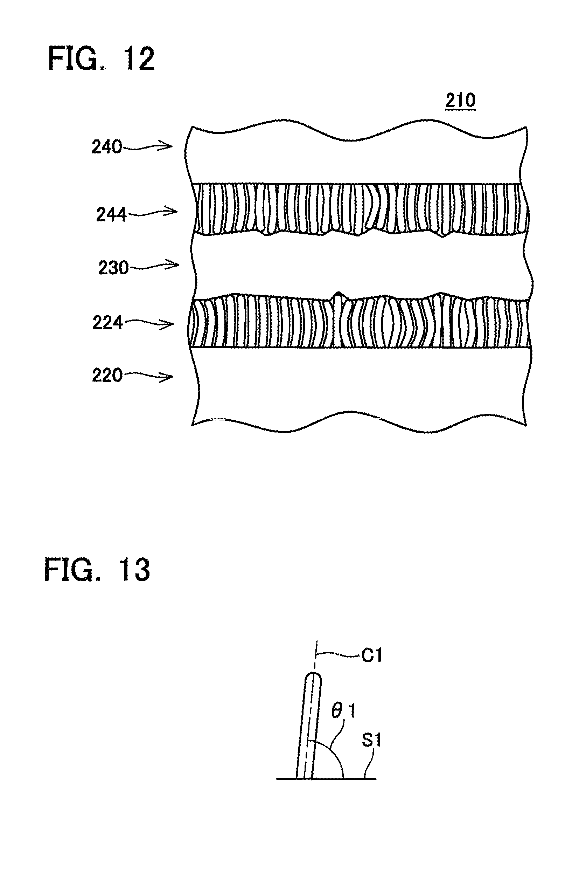

Although the heat float switches of the first and second embodiments have two thermally conductive members, the technique disclosed in the present description can be also applied to a heat float switch having three or more thermally conductive members. For example, FIGS. 11 and 12 show a heat float switch 210 having three thermally conductive members 220, 230, and 240. In this heat float switch 210, since a contacting surface 220a of the thermally conductive member 220 is formed of a carbon nanotube layer 224, the thermal resistance between the thermally conductive members 220 and 230 in the connected state decreases. Moreover, since a contacting surface 240a of the thermally conductive member 240 is formed of a carbon nanotube layer 244, the thermal resistance between the thermally conductive members 240 and 230 in the connected state decreases. In the heat float switch 210 of FIGS. 11 and 12, a carbon nanotube layer may be formed on a contacting surface closer to the thermally conductive member 230.

In addition, in the first and second embodiments, the states are switched between the unconnected state and the connected state by moving one thermally conductive member in parallel to the other thermally conductive member. However, when the states are changed from the unconnected state to the connected state, torsion, sideslip, or the like may be applied to one thermally conductive member so that shearing force occurs between the thermally conductive members. When the thermally conductive members are connected in this manner, the carbon nanotube layer can more easily come in close-contact with a counterpart contacting surface and the thermal resistance can be decreased further. In particular, when the contacting surfaces of both thermally conductive members are formed of the carbon nanotube layer, since the carbon nanotubes of both thermally conductive members are connected so as to interdigitate with each other, it is possible to increase the contact area as a result. Therefore, it is possible to further decrease the thermal resistance.

In addition, in the first and second embodiments, the heat float switch of which the states are switched between the connected state and the unconnected state by the actuator that is electrically controlled has been described. However, the technique of the present description may be also applied to a heat float switch of which the states are switched between the connected state and the unconnected state by thermal deformation of two thermally conductive members. For example, the technique of the present description may be applied to a heat float switch in which two thermally conductive members are not in contact with each other when the temperature of the heat float switch is low, and if the temperature of at least one thermally conductive member increases, the thermally conductive member expands and then the two thermally conductive members come in contact with each other. Alternatively, an additional member that thermally expands may be provided separately from the thermally conductive member of the heat float switch so as to be connected to at least one thermally conductive member. In such a heat float switch, it is possible to reduce the thermal resistance of the heat float switch by forming a carbon nanotube layer on any one or both of the contacting surfaces of two thermally conductive members. In such a heat float switch, it is preferable that the thermal expansion coefficient of the thermally conductive members is high. Moreover, the two thermally conductive members may have different thermal expansion coefficients and may have the same thermal expansion coefficient.

If the density of carbon nanotubes in the carbon nanotube layer is too low, the contact area of the carbon nanotube layer making contact with the counterpart thermally conductive member decreases. Moreover, if the density of carbon nanotubes in the carbon nanotube layer is too high, it becomes difficult for carbon nanotubes to be deformed, and the elasticity of the carbon nanotube layer disappears. Thus, the density (a value obtained by dividing the total area of the connecting portion between the carbon nanotubes and the base member by the surface area of the base member on which the carbon nanotubes stand) of carbon nanotubes on the surface of the base member on which the carbon nanotubes stand is preferably 20% or more and 90% or smaller. Moreover, in the above embodiments, it has been described that most of the carbon nanotubes have distal ends that make contact with the counterpart thermally conductive member. As mentioned above, since the carbon nanotubes have very high thermal conductivity in the longitudinal direction, it is preferable that the carbon nanotubes have the distal ends that make contact with the counterpart thermally conductive member in such a manner. Thus, although it is preferable that the carbon nanotubes stand at an angle as vertical as possible with respect to the base member, if the carbon nanotubes stand at an angle of 45 degrees or more with respect to the surface of the base member, the above effects can be obtained. However, 30% or more of carbon nanotubes included in the carbon nanotube layer stand so as to have an angle of 60 degrees or more with respect to the surface of the base member, particularly high effects can be obtained. This angle means the angle θ1 between the central axis C1 of a carbon nanotube and the surface S1 of the base member as shown in FIG. 13. Although very small uneven depressions may be present on the surface S1 of the base member, the angle can be measured by approximating the entire surface of the base member in a region where the carbon nanotubes stand to a flat surface.

In addition, in the above embodiments, although the base member is made of SiC, the base member may be formed of another member. However, it is preferable that the length of the carbon nanotube is 4 µm or smaller when the carbon nanotubes are formed on the surface of the base member by heating SiC which is the base member in a reduced-pressure atmosphere to selectively oxidize and remove Si atoms. That is, the thickness of the carbon nanotube layer is preferably 4 µm or smaller.

Specific embodiment of the present invention is described above, but that merely illustrates some possibilities of the teachings and does not restrict the claims thereof. The art set forth in the claims includes variations and modifications of the specific examples set forth above.

The technical elements disclosed in the present description or the drawings may be utilized separately or in various types of combinations, and are not limited to the combinations set forth in the claims at the time of filing of the application. Furthermore, the art disclosed herein may be utilized to achieve a plurality of aims simultaneously and the achievement of one of them itself exhibits technological advantage.

## Claims

1. A heat float switch comprising a first member and a second member, wherein
the first member comprises:
a base member; and
a carbon nanotube layer formed on the surface of the base member, and
the heat float switch is configured to switch states between a connected state in which the carbon nanotube layer of the first member is in contact with the second member and an unconnected state in which the carbon nanotube layer of the first member is not in contact with the second member.

2. The heat float switch of claim 1, wherein
the second member comprises:
a base member; and
a carbon nanotube layer formed on the surface of the base member of the second member, and
the carbon nanotube layer of the first member is in contact with the carbon nanotube layer of the second member in the connected state.

3. The heat float switch of claim 1 or 2, wherein
30% or more of carbon nanotubes in the carbon nanotube layer of the first member stand so as to have an angle of 60 degrees or more with respect to a surface of the base member.

4. The heat float switch of any of claims 1 to 3, wherein
resin is impregnated in the carbon nanotube layer of the first member.

5. The heat float switch of any of claims 1 to 4, wherein
a thickness of the carbon nanotube layer of the first member is 0.5 µm or more.

6. The heat float switch of any of claims 1 to 5, wherein
the base member of the first member is made of SiC.
